# EUROPÄISCHE PATENTSCHRIFT

(11) **EP 0 253 756 B1**
(45) Veröffentlichungstag und Bekanntmachung des Hinweises auf die Patenterteilung: **18.11.1993**
(21) Anmeldenummer: 87730050.9
(22) Anmeldetag: 08.05.1987
(51) Int. Cl.: H05K 5/00, H02B 1/06

(54) **Gehäuse, insbesondere Verteilergehäuse für die Fernmeldetechnik**
Casing, particularly distribution casing for telecommunication engineering
Boîte, en particulier boîte de distribution pour la technique des télécommunications

(30) Priorität: 16.07.1986 DE 3624347
(43) Veröffentlichungstag der Anmeldung: 20.01.1988
(73) Patentinhaber: KRONE Aktiengesellschaft, D-14167 Berlin (DE)
(72) Erfinder: Taybl, Christa, D-1000 Berlin 47 (DE)

(56) Entgegenhaltungen:
- DE-A- 3 346 243
- DE-B- 2 505 677
- DE-B- 2 557 697
- DE-U- 8 235 593
- DE-U- 8 420 329

## Beschreibung

Die Erfindung bezieht sich auf ein Gehäuse, insbesondere ein Verteilergehäuse für die Fernmeldetechnik, gemäß dem Oberbegriff des Anspruches 1.

Ein Gehäuse der gattungsgemäßen Art ist aus dem DE-GM 84 20 329 vorbekannt. Dieses Gehäuse dient als Verteilergehäuse der Fernmeldetechnik zur Aufnahme von Anschlußleisten für Kabeladern. Die Abdeckhaube des kastenförmigen Grundkörpers dieses Gehäuses besitzt als Führungselemente an den Innenseiten Führungsnuten, in die an den Außenseiten des Grundkörpers als Führungselemente ausgebildete Führungsrippen eingreifen. Ferner sind an der Abdeckhaube Führungswinkel angeformt, die ein seitliches Ausweichen der Abdeckhaube verhindern.

Nachteilig hierbei ist, daß sich die Führungsnuten und die Führungsrippen nur im unteren Bereich des Verteilergehäuses befinden und daß die Abdeckhaube nach kurzem Hub somit nach vorn entfernbar ist. Somit muß die Abdeckhaube im geöffneten Zustand des Verteilergehäuses abgelegt werden, wodurch diese leicht verlierbar ist. Ferner wird das zwischen Grundkörper und Abdeckhaube angordnete Dichtungselement nicht gleichmäßig an die Abdeckhaube angepreßt, da eine Führung der Abdeckhaube nur im unteren Bereich des Grundkörpers vorgesehen ist.

Aus der DE-B-2 557 697 ist eine Abdeckvorrichtung für ein Gehäuse bekannt, welches innerhalb der vier Seitenwände des Gehäuses aufgenommen bzw. eingeschlossen ist. Zum Öffnen des Gehäuses wird die Abdeckvorrichtung nach oben aus dem Gehäuse herausgeschwenkt, wobei die Abdeckvorrichtung um zwei an den Seitenwänden der Abdeckvorrichtung angeformten Ansatzbolzen gedreht wird.

Um die Abdeckvorrichtung in der Vertikallage der Abdeckvorrichtung zu fixieren, sind in unmittelbarer Nähe der ersten Ansatzbolzen Aufnahmen vorgesehen, denen ein am Gehäuse befestigtes zweites Paar von Ansatzbolzen eingreift, bis diese Bolzen in hakenförmigen Aufnahmen einrasten und somit die Abdeckvorrichtung in der Endlage fixieren.

Die Erfindung liegt die Aufgabe zugrunde, ein Gehäuse der gattungsgemäßen Art zu schaffen, dessen Abdeckhaube beim Verschließen durch eine gleichmäßige Druckkraft auf dem Grundkörper aufgedrückt wird, so daß das zwischengelegte Dichtungselement gleichförmig abdichtet.

Die Lösung dieser Aufgabe ergibt sich aus den kennzeichnenden Merkmalen des Anspruches 1. Erfindungsgemäß dienen die oberen Führungselemente zum Einrasten der Abdeckhaube in der Offenstellung und zum Drehen und Schließen der Abdeckhaube in der Schließstellung und die unteren Führungselemente der Führung und Einrastung der Abdeckhaube beim Schließen. Beim Schließen des kastenförmigen Grundkörpers mittels der Abdeckhaube werden die an dieser befestigten Zapfen in den oberen und unteren Zapfenführungen geführt, so daß die Abdeckhaube beim Verschließvorgang allmählich immer stärker an den Grundkörper angepreßt wird, so daß das zwischen Abdeckhaube und Grundkörper befindliche Dichtungselement mit gleichförmiger Druckkraft abdichtet. Dies erfolgt unter Wirkung der unter dem spitzen Winkel zur Grundfläche des Grundkörpers geneigten und gegen die Rückwand des Grundkörpers gerichteten Zapfenführungen.

Weitere vorteilhafte Ausgestaltungen der Erfindung ergeben sich aus den Unteransprüchen. So bewirkt die gemäß Anspruch 2 vorgesehene Raststellung, daß die Abdeckhaube in der Offenstellung nur nach Überwindung dieser Raststellung entfernbar ist. Ferner dienen die gemäß Anspruch 8 vorgesehene Halterippe und der dieser zugeordete Halterand der Abdeckhaube zur Lagefixierung der Abdeckhaube im geöffneten Zustand. Schließlich dient eine Verriegelungseinrichtung zur Verhinderung der Öffnung des Gehäuses durch Unbefugte.

Die Erfindung ist nachfolgend anhand eines in den Zeichnungen dargestellten Ausführungsbeispieles näher erläutert. Es zeigen:
- Fig. 1: eine teilweise geschnitten dargestellte Seitenansicht des Verteilergehäuses,
- Fig. 2: eine teilweise aufgeschnittene Vorderansicht des Verteilergehäuses,
- Fig. 3: eine Untersicht des Verteilergehäuses,
- Fig. 4: das obere Ende des Grundkörpers mit darüber befindlicher, im Schnitt dargestellter Abdeckhaube in der Einführungsstellung,
- Fig. 5: das obere Ende des Grundkörpers mit im Schnitt dargestellter Abdeckhaube in der eingerasteten Offenstellung,
- Fig. 6: eine Seitenansicht des Grundkörpers mit der im Schnitt dargestellten, aus der Offenstellung in die Schließstellung überführten Abdeckhaube,
- Fig. 7: eine Seitenansicht des Grundkörpers mit im Schnitt dargestellter Abdeckhaube kurz vor der Schließstellung,
- Fig. 8: das obere Ende des Grundkörpers mit dem oberen Führungselement in der Seitenansicht,
- Fig. 9: einen Schnitt gemäß der Linie IX - IX in Fig. 8 durch das obere Ende des Grundkörpers in der Ebene des oberen Führungselementes,
- Fig. 10: eine Perspektivdarstellung einer Verriegelungsscheibe mit Verriegelungselement und
- Fig. 11: eine Seitenansicht des oberen Endes der Abdeckhaube mit einer Schlitzöffnung für den Verriegelungszapfen der Verriegelungsscheibe.

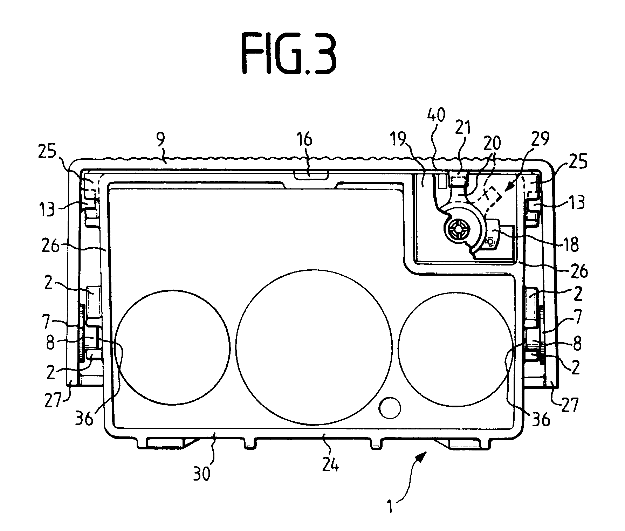

Das im Querschnitt rechteckige Verteilergehäuse 1 besteht aus einem Grundkörper 24 und aus einer Abdeckhaube 9 sowie einem dazwischen befindlichen, als Dichtungsring 14 ausgebildeten Dichtungselement. Der Grundkörper 24 ist kastenförmig ausgebildet und mit einer offenen Frontseite 32 versehen. Die den Grundkörper 24 verschließende Abdeckhaube 9 ist im horizontalen Querschnitt U-förmig und im vertikalen Querschnitt L-förmig ausgebildet, wie es die Figuren 3 bzw. 1 und 7 zeigen.

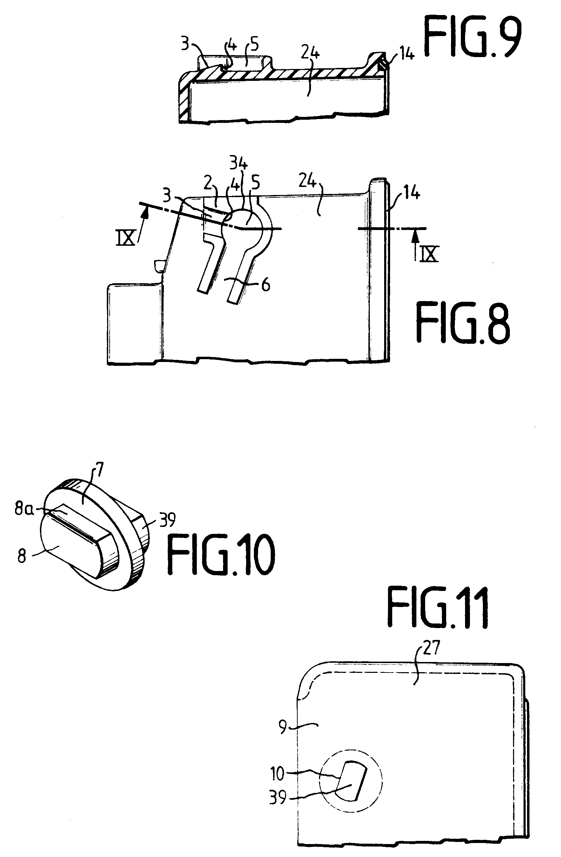

An beiden Außenwänden 26 des Grundkörpers 24 ist auf der Außenseite jeweils ein oberes Führungselement 2 angeordnet, das als Zapfenführung 36 für je einen auf den Innenseiten der Seitenwände 27 der Abdeckhaube 9 angeordneten Zapfen 8 dient. Dieses Führungselement 2 besteht, wie es insbesondere die Figuren 8 und 9 zeigen, aus einer Einlaufschräge 3, einer Raststellung 4, einem Drehlager 5 und einer Spannut 6. Diese verläuft unter einem Winkel (α) geneigt zur Grundfläche 28 des Grundkörpers 24 gegen dessen Rückwand 30. Die Spannut 6 und die Einlaufschräge 3 stehen unter einem Winkel von etwa 90° zueinander und verlaufen radial zum Drehlager 5. Wie es die Fig. 8 und 9 zeigen, sind die Einlaufschräge 3, die Raststellung 4, das Drehlager 5 und die Spannut 6 durch Stege gebildet, die außen an den Grundkörper 24 angeformt und einstückig mit diesem aus Kunststoff hergestellt sind.

Am Grundkörper 24 sind ferner auf den Außenseiten beider Seitenflächen 26 untere Führungselemente 25 angeordnet, die ebenfalls einstückig mit dem Grundkörper 24 aus Kunststoff ausgeformt sind. Diese Führungselemente 25 bestehen aus einem unter dem Winkel (α) gegen die Grundfläche 28 des Grundkörpers 24 gerichteten Führungssteg 17 und einem im Abstand zu diesem, auf der vorderen, unteren Ecke des Grundkörpers 24 angeformten Spannocken 12. Diese bilden zwischen sich eine Zapfenführung 37 für einen auf der Innenseite der Abdeckhaube (9) angeformten Spannzapfen 13.

Der Zapfen 8 zum Eingriff in das obere Führungselement 2 ist gemäß Fig. 10 an einer Verriegelungsscheibe 7 aus Kunststoff angeformt. Der Zapfen 8 ist mit parallelen Seitenflächen 8a versehen, welche im eingebauten Zustand der Verriegelungsscheibe 7 unter dem Winkel (α) zur Grundfläche 28 der Abdeckhaube 9 gerichtet sind. Auf der dem Zapfen 8 gegenüberliegenden Seite der Verriegelungsscheibe 7 ist ein entsprechend ausgebildeter Verriegelungszapfen 39 angeordnet, der in eine entsprechend ausgeformte schlitzartige Öffnung 10 der Seitenwände 27 der Abdeckhaube 9 eingreift, wie es in Fig. 11 dargestellt ist. In einer anderen Ausführungsform können die Zapfen 8 auch an den Seitenflächen 27 der Abdeckhaube 9 angeformt und einstückig mit dieser aus Kunststoff hergestellt sein.

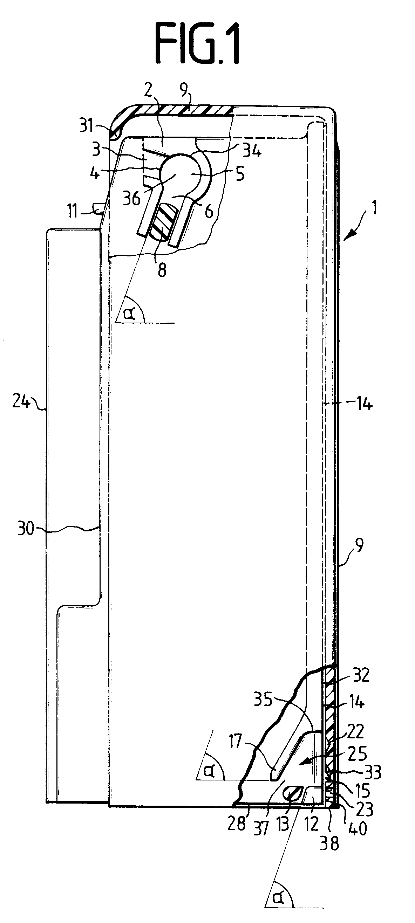

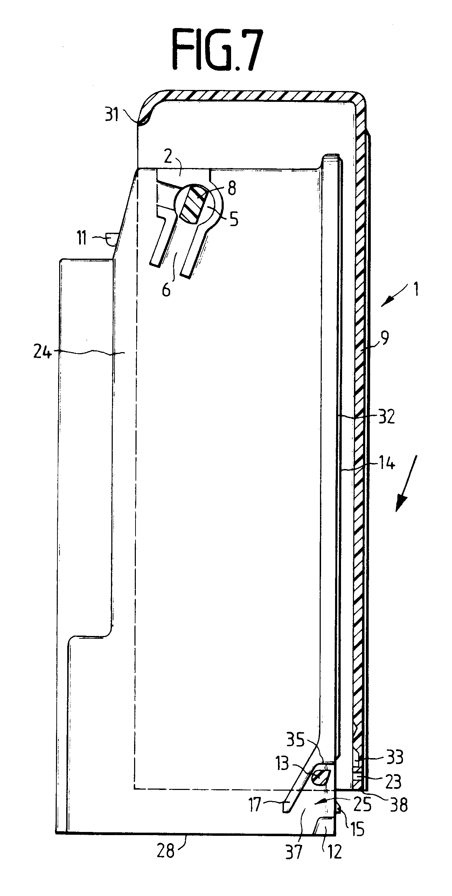

Die Abdeckhaube 9 weist nahe ihrer Grundfläche 28 und nahe der Frontseite 32 auf den Innenseiten ihrer Seitenwände 27 je einen Spannzapfen 13 zur Einführung in die Zapfenführung 37 des unteren Führungselementes 25 auf, wie es insbesondere in Fig. 1 und 7 dargestellt ist.

Der Grundkörper 24 weist auf seiner Frontseite 32 in Höhe der Spannocken 12 einen Rasthaken 15 und die Abdeckhaube 9 eine entsprechend angeordnete Rastöffnung 33 etwa in der Höhe des Spannzapfens 13 in ihrer Vorderwand 40 auf, in welche der Rasthaken 15 in der Schließstellung der Abdeckhaube 9 rastend eingreift, wie es in Fig. 1 dargestellt ist.

Ferner sind auf der Außenseite der Rückwand 30 des Grundkörpers 24 im oberen Bereich eine parallel zur Grundfläche 28 verlaufende Halterippe 11 und am oberen Ende der Abdeckhaube 9 ein rückwärtiger Halterand 31 angeordnet und derart zueinander angepaßt, daß der Malterand 31 in der um 90° hochgeklappten Stellung der Abdeckhaube 9 hinter bzw. unter der Halterippe 11 des Grundkörpers 24 einrastet, wie es in Fig. 5 dargestellt ist.

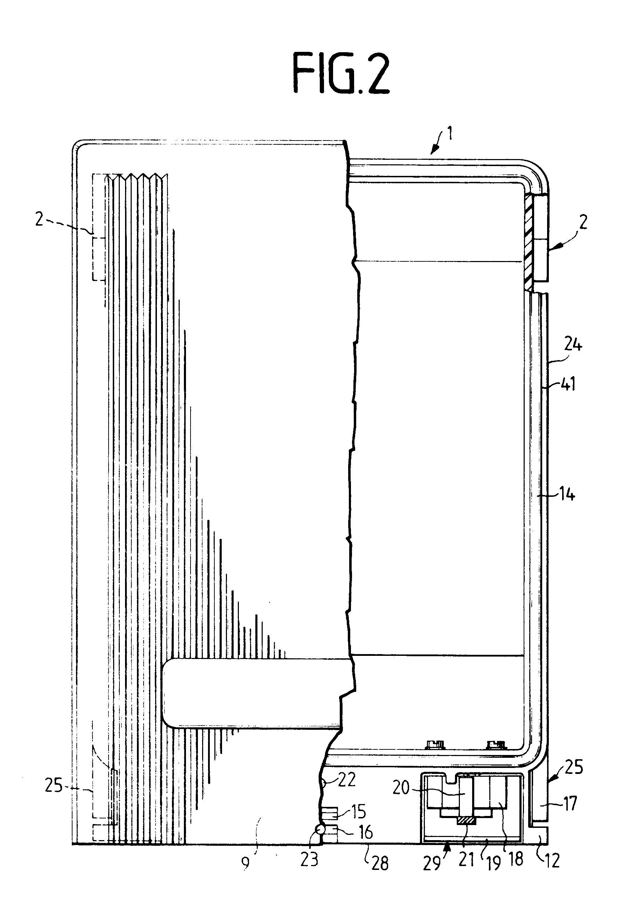

Schließlich ist eine Verriegelungseinrichtung 29 aus einem am Grundkörper 24 befestigten Schloß 18 mit einer schwenkbaren Schließnase 20 und aus einer auf der Innenseite der Vorderwand 40 der Abdeckhaube 9 angebrachten Rippe 21 vorgesehen, hinter welche die Schließnase 20 bei verriegelter Abdeckhaube 9 greift, wie es in Fig. 2 und 3 dargestellt ist.

Die Fig. 2 zeigt noch die Anordnung einer umlaufenden Nut 41 in der kastenartig offenen Frontseite 32 des Grundkörpers 24, in welche ein Dichtungsring 14 eingelegt ist. Dieser kommt bei geschlossenem Verteilergehäuse 1 an der Innenseite der Frontfläche der Abdeckhaube 9 zur Anlage.

Es wird nachfolgend das Schließen und Öffnen des aus dem kastenartigen Grundkörpr 24 und der entsprechend ausgebildeten Abdeckhaube 9 bestehenden Verteilergehäuses 1 näher erläutert.

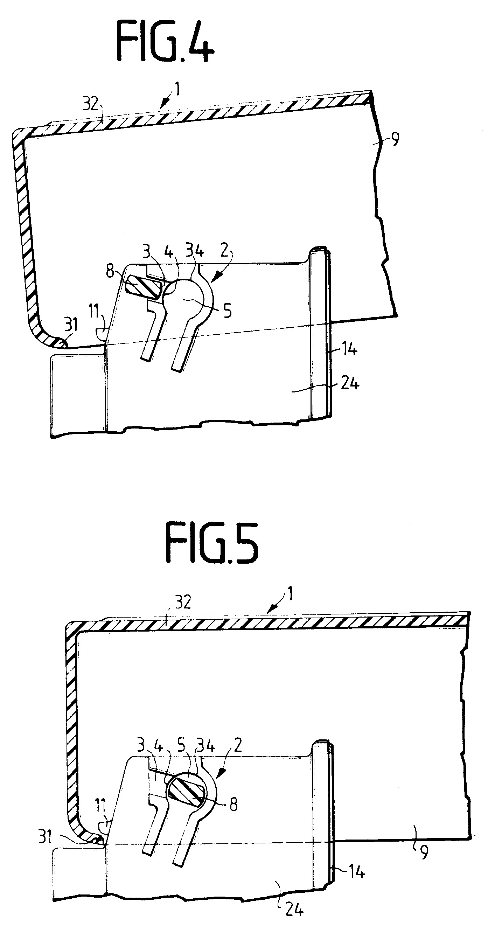

Zunächst werden die innen an beiden Seitenwänden 27 der Abdeckhaube 9 angeordneten, freistehenden Zapfen 8 in die Einlaufschräge 3 der am Grundkörper 24 angeordneten, oberen Führungselemente 2 eingeführt, wie es in Fig. 4 dargestellt ist. Beim Hineinschieben der Zapfen 8 in das Drehlager 5 des oberen Führungselementes 2 wird die Raststellung 4 überwunden, welche in Fig. 9 als Rastnase dargestellt ist, so daß die Abdeckhaube 9 nun nur nach Überwindung dieser Raststellung 4 wieder entfernt werden kann. Die Zapfen 8 befinden sich nun in dem Drehlager 5 der jeweiligen oberen Führungselemente 2, wobei die Abdeckhaube 9 eine etwa rechtwinklig zum Grundkörper 24 stehende Position einnimmt. In dieser Position greift der Halterand 31 am oberen, rückwärtigen Ende der Abdeckhaube 9 hinter die parallel zur Grundfläche 28 am oberen Ende des Grundkörpers 24 verlaufende Halterippe 11, wie es in Fig. 5 dargestellt ist, wodurch die Abdeckhaube 9 trotz ihres Eigengewichtes in der etwa rechtwinkligen Position zum Grundkörper 24 steht. In dieser in Fig. 5 dargestellten Position ist das Verteilergehäuse 1 geöffnet und für Arbeiten an in diesem angeordneten, nicht näher dargestellten Bauelementen der Fernmeldetechnik frei zugänglich.

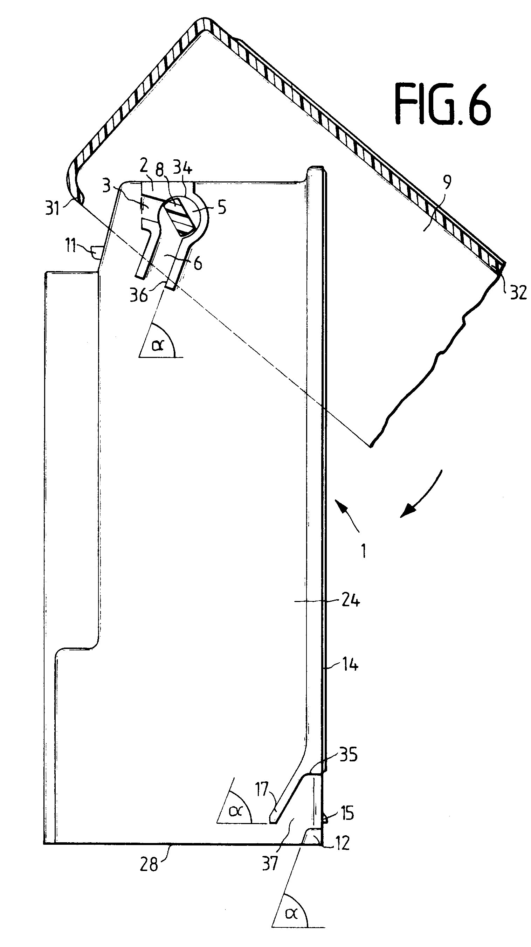

Zum Verschließen des Verteilergehäuses 1 wird, wie es in Fig. 6 dargestellt ist, die Abdeckhaube 9 durch einen leichten Druck aus ihrer Raststellung ausgelöst, wodurch sich der Halterand 31 aus der Halterippe 11 löst und wodurch die Abdeckhaube 9 nach unten geschwenkt wird. Das Schwenken erfolgt unter Führung des im Drehlager 5 befindlichen Zapfens 8.

In der in Fig. 7 dargestellten, etwa senkrechten Position der Abdeckhaube 9 greifen die unten, innen an den Seitenwänden 27 der Abdeckhaube 9 angeordneten Spannzapfen 13 in die unteren Zapfenführungen 37 der Führungselemente 25 des Grundkörpers 24 ein. Die Spannzapfen 13 werden nun zwischen dem Führungssteg 17 und dem Spannocken 12 in den unteren Führungselementen 25 geführt. Gleichzeitig werden die Zapfen 8 in der Spannut 6 der oberen Führungselemente 2 geführt.

Da die Spannut 6 und der Führungssteg 17 unter dem Winkel (α) zur Grundfläche 28 des Grundkörpers 24 bzw. zur Grundfläche 38 der Abdeckhaube 9 geneigt sind, wird nun die Frontseite 32 der Abdeckhaube 9 allmählich mit einem immer stärker werdenden Druck gegen den zwischen Grundkörper 24 und Frontseite 32 befindlichen Dichtungsring 14 gepreßt, so lange bis die Abdeckhaube 9 unter einem gleichmäßig wirkenden Druck an dem Dichtungsring 14 anliegt. Der Spannzapfen 13 jedes unteren Führungselementes 25 kommt hinter dem Spannocken 12 zur Anlage. Ferner schnappt in der Endstellung der Abdeckhaube 9 der Rasthaken 15 des Grundkörpers 24 in die Rastöffnung 33 der Frontseite 32 der Abdeckhaube 9 ein, wie es in Fig. 1 dargestellt ist.

Die zusätzlich angebrachte und in den Figuren 2 und 3 dargestellte Verriegelungseinrichtung 29 dient zur Verhinderung der Öffnung der Abdeckhaube 9 durch Unbefugte. Das Schloß 18 mit Schließnase 20 wird mit einem Abdeckblech 19 von innen an die Bodenwand des Grundkörpers 24 angeschraubt, wie es in Fig. 2 dargestellt ist. Beim Verschließen der Verriegelungseinrichtung 29 schiebt sich die Schließnase 20 des Schlosses 18 vor die an der Innenseite der Abdeckhaube 9 angeformte Rippe 21, so daß ein Öffnen der Abdeckhaube 9 bzw. ein nach oben Schieben verhindert ist.

Zum Einhängen eines nicht dargestellten Vorhängeschlosses können im Grundkörper 24 und in der Abdeckhaube 9 markierte Löcher 22 durchgebohrt werden. Ferner ist das Verteilergehäuse 1 durch im Grundkörper 24 und in der Abdeckhaube 9 vorgesehene Plombierlöcher 23 plombierbar.

Zum Öffnen des Verteilergehäuses 1 muß nach dem Entriegeln der Verriegelungseinrichtung 29 ein Schraubendreher in einen Freiraum 16 eingeführt werden, der nahe dem Rasthaken 15 und der Rastöffnung 33 angeordnet ist, um so den Rasthaken 15 aus der Rastöffnung 33 zu entrasten. Die Abdeckhaube 9 wird gleichmäßig um einen geringen Betrag nach oben geschoben, bis die Zapfen 8 gegen die Lagerflächen 34 der Drehlager 5 und die Spannzapfen 13 gegen die Endflächen 35 der Führungsstege 17 stoßen. Durch die Zwangsführung der Zapfen 8 in den Spannuten 6 und der Zapfen 13 am Führungssteg 17 wird die Abdeckhaube 9 beim nach oben Schieben gleichmäßig vom Dichtungsring 14 abgehoben. Die Abdeckhaube 9 kann nun durch Hochklappen geöffnet werden, so lange bis der Halterand 31 hinter die Halterippe 11 einrastet (Fig. 5).

## Patentansprüche

1. Gehäuse (1), insbesondere Verteilergehäuse für die Fernmeldetechnik, aus einem kastenförmigen Grundkörper (24), der mit einer Abdeckhaube (9) verschließbar ist, und aus einem zwischen Grundkörper und Abdeckhaube angeordneten Dichtungselement (14) sowie aus zwischen den gegenüberliegenden Seitenwänden des Grundkörpers und der Abdeckhaube angeordneten Führungselementen (2) zur Führung der Abdeckhaube am Grundkörper beim Öffnen und Schließen der Abdeckhaube,
**dadurch gekennzeichnet,**
daß obere und untere Führungselemente (2, 25) vorgesehen sind, die aus je einem Zapfen (8, 13) auf den Innenseiten der Seitenwände (27) der Abdeckhaube (9) und je einer, den Zapfen (8, 13) zugeordneten Zapfenführung (36, 37) auf den Außenwänden (26) des Grundkörpers (24) ausgebildet sind, und daß die Zapfenführungen (36, 37) unter einem spitzen Winkel (α) zur Grundfläche (28) des Grundkörpers (24) geneigt gegen die Rückwand (30) des Grundkörpers (24) gerichtet sind.

2. Gehäuse nach Anspruch 1, dadurch gekennzeichnet, daß die oberen Führungselemente (2) jeweils aus den auf den Innenseiten der Seitenwände (27) der Abdeckhaube (9) befestigten und mit parallelen, unter dem Winkel (α) zur Grundfläche (38) der Abdeckhaube (9) gerichteten Seitenflächen (8a) versehenen Zapfen (8) und aus der mit einer Einlaufschräge (3), einer Raststellung (4), einem Drehlager (5) und einer Spannut (6) versehenen Zapfenführung (36) gebildet sind.

3. Gehäuse nach Anspruch 2, dadurch gekennzeichnet, daß der Zapfen (8) an einer Verriegelungsscheibe (7) ausgebildet ist, die mittels eines dem Zapfen (8) entsprechenden Verriegelungszapfen (39) in entsprechend ausgeformte schlitzartige Öffnungen (10) der Seitenwände (27) der Abdeckhaube (9) eingreift.

4. Gehäuse nach Anspruch 2, dadurch gekennzeichnet, daß der Zapfen (8) an der Innenseite der Außenwand (26) der Abdeckhaube (9) angeformt ist.

5. Gehäuse nach Anspruch 2, dadurch gekennzeichnet, daß die Spannut (6) unter dem Winkel (α) gegen die Rückwand (30) des Grundkörpers (24) gerichtet ist und daß die Einlaufschräge (3) und die Spannut (6) unter etwa 90° zueinander versetzt radial zum Drehlager (5) angeordnet sind.

6. Gehäuse nach einem der Ansprüche 1 bis 5, dadurch gekennzeichnet, daß die unteren Führungselemente (25) aus je einem an den Innenseiten der Seitenwände (27) der Abdeckhaube (9) angeformten Spannzapfen (13) und aus je einem am Grundkörper (24) unter dem Winkel (α) zur Grundfläche (28) angeformten Führungssteg (17) mit je einem diesem zugeordneten Spannocken (12) gebildet sind, welche die Zapfenführung (37) für den Spannzapfen (13) bilden.

7. Gehäuse nach Anspruch 6, dadurch gekennzeichnet, daß der Grundkörper (24) auf der Frontseite (32) des Grundkörpers (24) in Höhe der Spannocken (12) einen Rasthaken (15) und die Abdeckhaube (9) eine entsprechend angeordnete Rastöffnung (33) aufweisen, in welche der Rasthaken (15) in der Schließstellung der Abdeckhaube (9) rastend eingreift.

8. Gehäuse nach einem der Ansprüche 1 bis 7, dadurch gekennzeichnet, daß auf der Außenseite der Rückwand (30) des Grundkörpers (24) im oberen Bereich eine parallel zur Grundfläche (28) verlaufende Halterippe (11) und am oberen Ende der Abdeckhaube (9) ein rückwärtiger Halterand (31) angeordnet und derart zueinander angepaßt sind, daß der Halterand (31) in der um 90° hochgeklappten Stellung der Abdeckhaube (9) hinter bzw. unter der Halterippe (11) des Grundkörpers (24) einrastet.

9. Gehäuse nach einem der Ansprüche 1 bis 8, dadurch gekennzeichnet, daß eine Verriegelungseinrichtung (29) aus einem am Grundkörper (24) befestigten Schloß (18) mit einer schwenkbaren Schließnase (20) und aus einer auf der Innenseite der Vorderwand (40) der Abdeckhaube (9) angebrachten Rippe (21) vorgesehen ist, hinter welche die Schließnase (20) bei verriegelter Abdeckhaube (9) greift.

## Claims

1. A casing, particularly a distribution casing for telecommunication engineering, comprising a box-type base body (24) to be closed by a cover (9), and a sealing element (14) arranged between said base body and said cover, and guide elements (2) arranged between the opposed side walls of the base body and the cover for guiding said cover at the base body during opening and closing,
characterized by that upper and lower guide elements (2, 25) are provided, comprising one trunnion (8, 13) each on the inner sides of the side walls (27) of the cover and one trunnion guide portion (36, 37) each on the outer walls (26) assigned to said trunnions (8, 13), and that the trunnion guide portions (36, 37) are directed at an acute angle (α) to the base surface (28) of the base body (24), inclined against the rear wall (30) of the base body (24).

2. A casing according to claim 1,
characterized by that the upper guide elements (2) are each formed of the trunnions (8) attached on the inner sides of the side walls (27) of the cover (9) and provided with parallel side faces (8a) directed at the angle (α) to the base surface (38) of the cover (9), and of the trunnion guide portion (36) provided with an inclined run-in portion (3), a latched position (4), a pivot bearing (5) and a clamping groove (6).

3. A casing according to claim 2,
characterized by that the trunnion (8) is formed at a locking disc (7), engaging by means of a locking trunnion (39) shaped corresponding to the trunnion (8) into correspondingly shaped slot-type openings (10) of the side walls (27) of the cover (9).

4. A casing according to claim 2,
characterized by that the trunnion (8) is formed at the inner side of the outer wall (26) of the cover (9).

5. A casing according to claim 2,
characterized by that the clamping groove (6) is directed at the angle (α) against the rear wall (30) of the base body (24), and that the inclined run-in portion (3) and the clamping groove (6) are disposed offset at an angle of approximately 90° relative to each other, radially to the pivot bearing (5).

6. A casing according to one of claims 1 to 5,
characterized by that the lower guide elements (25) comprise one clamping trunnion (13) each formed at the inner sides of the side walls (27) of the cover (9), and one guide web (17) each formed at the base body (24) at the angle (α) to the base surface (28) having one clamping cam (12) each assigned thereto, which represent the trunnion guide portion (37) for the clamping trunnion (13).

7. A casing according to claim 6,
characterized by that the base body (24) comprises, on its front side (32) near to the clamping cams (12), a latch hook (15), and that the cover (9) comprises a correspondingly disposed latch opening (33), into which the latch hook (15) will latchingly engage, in the closed position of the cover (9).

8. A casing according to one of claims 1 to 7,
characterized by that on the outside of the rear wall (30) of the base body (24), in the upper area, a holding rib (11) extending parallely to the base surface (28), and at the upper end of the cover (9), a rear-side holding border (31) are disposed, and are fitted to each other such that the holding border (31) latches, in the position of the cover (9) flapped upwardly by 90°, behind or below, resp., the holding rib (11) of the base body (24).

9. A according to claim 8,
characterized by that a locking device (29) composed of a lock (18) attached at the base body (24) having a pivoting closing lug (20) and of a rib (21) arranged on the inner side of the front wall (40) of the cover (9) is provided, behind said locking device the closing lug (20) being engageable, with closed cover (9).

## Revendications

1. Boîte (1), en particulier boîte de distribution pour la technique des télécommunications, consistant en un corps de base (24) en forme de caisson, pouvant être fermé avec une calotte (9), et en un élément d'étanchéité (14) disposé entre le corps de base et la calotte, ainsi qu'en des éléments de quidage (2) disposés entre les parois latérales opposées du corps de base et la calotte pour le guidage de la calotte sur le corps de base pendant l'ouverture et la fermeture de la calotte,
**caractérisée en ce que**
des éléments de guidage supérieurs et inférieurs (2, 25) sont prévus, consistant en un tenon (8, 13) sur chaque face intérieure des parois latérales (27) de la calotte (9) et d'un guidage (36, 37) pour chaque tenon (8, 13) sur les parois extérieures (26) du corps de base (24), et en ce que les guidages de tenon (36, 37) sont inclinés d'un angle aigu (α) par rapport à la surface de base (28) du corps de base (24) et dirigés contre la paroi arrière (30) du corps de base (24).

2. Boîte selon la revendication 1, caractérisée en ce que les éléments de guidage (2) supérieurs sont formés par des tenons (8) fixés sur les faces intérieures des parois latérales (27) de la calotte (9) et de surfaces (8a) parallèles orientées sous un angle (α) vers la surface de base (38) de la calotte (9) et par un guidage (36) muni d'un biseau d'entrée (3), d'une position d'arrêt (4), d'un coussinet de pivotement (5) et d'une rainure de serrage (6).

3. Boîte selon la revendication 2, caractérisée en ce que le tenon (8) est disposé sur un disque de verrouillage (7) qui, moyennant un tenon de verrouillage (39) correspondant au tenon (8), enclenche dans des ouvertures (10) en forme de fentes dans les parois latérales (27) de la calotte (9).

4. Boîte selon la revendication 2, caractérisée en ce que le tenon (8) est disposé sur la face intérieure de la paroi extérieure (26) de la calotte (9).

5. Boîte selon la revendication 2, caractérisée en ce que la rainure de serrage (6) est dirigée sous un angle (α) contre la paroi arrière (30) du corps de base 24 et que le biseau d'entrée (3) et la rainure de serrage (6) sont déplacés d'environ 90° entre eux radialement par rapport au coussinet de pivotement (5).

6. Boîte selon l'une des revendications 1 à 5, caractérisée en ce que les éléments de guidage inférieurs (25) sont formés par un tenon de serrage (13) disposé sur chaque face intérieure des parois latérales (27) de la calotte (9) et par une barrette de guidage (17) disposée sur le corps de base (24) sous un angle (α) par rapport à la surface de base (28) avec une came de serrage (12) y coordonnée, formant le guidage de tenon (37) pour le tenon de serrage (13).

7. Boîte selon la revendication 6, caractérisée en ce que le corps de base (24) présente, sur la face frontale (32) du corps de base (24) au niveau des cames de serrage (12), un crochet d'arrêt (15) et que la calotte (9) présente une ouverture d'arrêt (33) correspondante dans laquelle le crochet d'arrêt (15) enclenche en position de fermeture de la calotte (9).

8. Boîte selon l'une des revendications 1 à 7, caractérisée en ce que sur la face extérieure de la paroi arrière (30) du corps de base (24) est disposée dans la zone supérieure, une nervure d'arrêt (11) parallèle à la surface de base (28) et, à l'extrémité supérieure de la calotte (9), un bord de retenu (31) qui sont adaptés l'un par rapport à l'autre, de sorte que le bord de retenu (31) enclenche en position de la calotte pivotée de 90° vers le haut derrière ou sous la nervure d'arrêt (11) du corps de base (24).

9. Boîte selon l'une des revendications 1 à 8, caractérisée en ce que un dispositif de verrouillage (24) consistant en une serrure (18) fixée sur le corps de base (24) avec un taquet pivotable (20) et d'une nervure (21) disposée sur la face intérieure de la paroi antérieure (40) de la calotte (9) derrière laquelle enclenche le taquet de fermeture (20) si la calotte (9) est verrouillée.
